Europäisches Patentamt

European Patent Office

Office européen des brevets

(11) Publication number: **0 320 529 B1**

# EUROPEAN PATENT SPECIFICATION

(45) Date of publication of patent specification: **16.12.92** (51) Int. Cl.⁵: **B65G 43/08**, B07C 5/36

(21) Application number: **87118790.2**

(22) Date of filing: **18.12.87**

(54) **Control means in conveyor systems.**

(43) Date of publication of application:
**21.06.89 Bulletin 89/25**

(45) Publication of the grant of the patent:
**16.12.92 Bulletin 92/51**

(84) Designated Contracting States:
**AT BE CH DE ES FR GB GR IT LI LU NL SE**

(56) References cited:
**EP-A- 0 159 559**
**GB-A- 2 098 565**
**US-A- 3 774 213**

(73) Proprietor: **ELPATRONIC AG**
**Baarerstrasse 112**
**CH-6300 Zug(CH)**

(72) Inventor: **Martin, Michael Stephen**
**The Mill High Street**
**Meldreth Royston Hertfordshire SG8**
**6LB(GB)**

## Description

This invention relates to a method of and means for monitoring the movement of articles travelling along a conveyor system, in particular for controlling the action of device that are provided to operate on the conveyed articles.

It is often required to act upon articles travelling on a conveyor system in accordance with some signal triggered by the presence of the article on the system, and to allow for a time interval between the detection of the article and the action taken. In a specific example, an object travelling along the conveyor system may be scanned and inspected at one station on the conveyor path and, depending upon the results of the inspection, an action is required to be performed on the article, which, at that stage has travelled onwards downstream of the inspection station. The operating device is therefore located at a downstream station and it is essential to be able to determine with sufficient precision when the article will arrive at that downstream station. Failure to do so result in the identified article not being taken on another article unnecessarely, and even in the conveyor becoming jammed.

It is known to coordinate the functions of the inspection and action at spaced stations by determining the speed of the conveyor on which the articles are travelling and predicting from that speed the time an article will take to move between the inspection and operating stations. At low speeds this method is generally sufficiently accurate. However, with increase of speed, slippage of the objects can occur relative to the conveyor. These effects may be so great that any attempt to predict the future position of an article from the conveyor speed gives results that are too unreliable to be used. With so-called air conveyors in which the articles are moved by air jets, the speed at which they are conveyed cannot be measured at all from the conveyor track because, of course, this remains stationary.

It is also known from GB 2 098 565 to coordinate the functions of inspection and action device at spaced stations by adjusting the articles precisely by a star-wheel and a respectively associated guide plate in order to be in a predetermined inspection position on a carrying conveyor belt and travelling from an inspection position to a downstream located rejection position. Provided that one could assume a continuous flow of the inspected objects on the conveyor belt, it would be possible to derive from the respective speed of the conveyor belt the time delay which one object needs for travelling from the inspection position to the rejection position. But the disadvantage again is the fact that the real movement of the objects to be inspected and then rejected is not constant, especially -as already mentioned above- if such objects are moved on conveyors by air jets. Furthermore the slippage of the objects on the conveyor belt cannot be exactly predicted over a certain distance and is in no way constant.

However, the single features

(1) the arrival of the article (in a predetermined position) at the activating station is utilized to generate a start signal, and

(2) the actuating signals generated in accordance with the moment of arrival so calculated in order to synchronise the performance of the action at the operating station with the arrival of the article,

are known from this prior art.

The present invention is directed to a new and simple method of overcoming these difficulties in known conveyor systems and to apparatus for performing the new method.

According to one aspect of the invention, a method of controlling an action on a selected article travelling on a conveyor after identification of the article at an activating station, the action being performed at an operating station at a distance along the conveyor downstream of the activating station, is characterised in that the arrival of the article at the activating station is utilized to generate a start signal for measuring its travel along the conveyor, that the movement of the article along the conveyor is measured by use of a Doppler-effect detection device during the passage of the article between said stations, the Doppler-effect device producing a cumulative series of distance measurements to determine from the start signal the moment of arrival of the article at the operating station, and that an actuating signal is generated in accordance with the moment of arrival so calculated in order to synchronise the performance of said action with said arrival of the selected article.

Apparatus according to the invention comprises a Dopplereffect detection device directed onto the path of the article between said first and second stations, control means connected to said activating means being arranged to receive an input signal therefrom, upon identification of the selected article and comprising processing means for accumulating a series of movement measurements from said Doppler-effect device to determine the distance travelled by the selected article along the conveyor system from said first station, said control means being arranged to generate an output signal for actuating said operation of the means at said second station when the travel distance determined by said processing means indicates the selected article has reached said second station.

Doppler-effect devices, that is to say, devices which respond to a frequency difference between transmitted and reflected radiation, are known as such for speed measurements, especially of vehicles. In the present invention the device and its associated data processing system can be used simply to measure displacements of the articles being monitored, without regard to their speed of movement. In effect, the pulses recorded by such devices from reflected signals are related to a specific change of position between the device and the article being monitored so it is possible to denominate the change of position between activating and operating stations in terms of a specific number of pulses.

An embodiment of the invention will be described in more detail, by way of example, with reference to the accompanying drawings, in which:

Fig. 1 is a schematic illustration of a conveying system provided with apparatus according to the invention,

Fig. 2 is a block schematic diagram of the control computer of the apparatus, and

Fig. 3 is a flow chart showing the operation of the control computer.

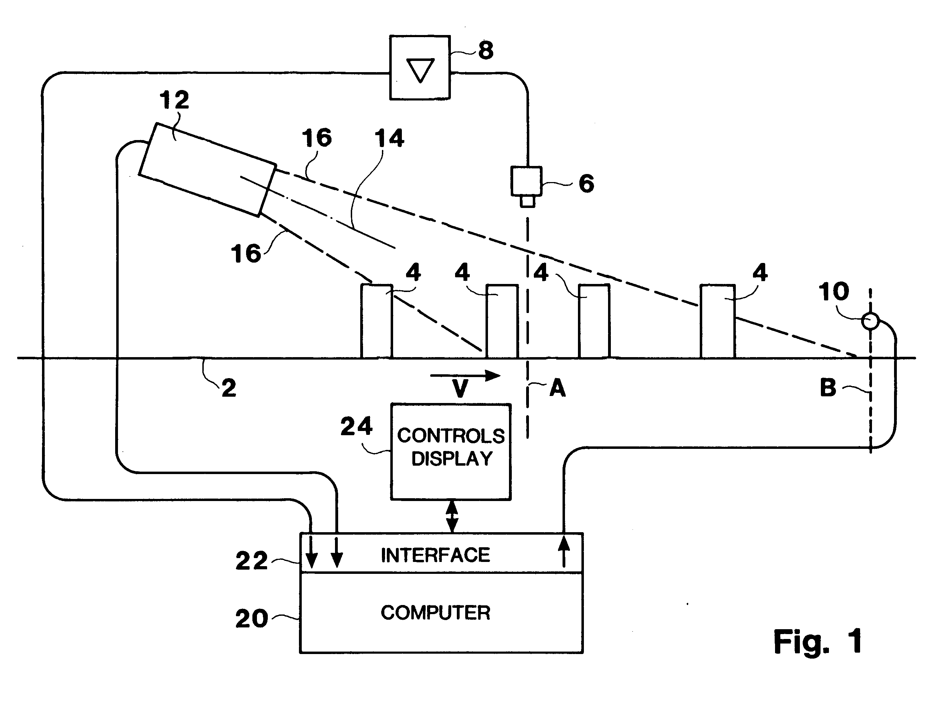

Fig. 1 shows a belt 2 of a conveyor system travelling in the arrowed direction V and carrying a series of empty metal can bodies 4 which it is required to inspect, eg. to check that the top edges of the cans are not deformed. The inspection is performed at station A on the conveyor using a television camera 6 that views each can body as it passes underneath the camera and the camera images are processed by a processing circuit 8 of known form (eg. as described in GB 2175396A, the contents of which are incorporated herein by reference) to detect whether any of the can bodies have top edges deformed to an extent that will create problems in the can filling system to which they are being taken by the conveyor 2. Any reject can bodies must be removed from the conveyor and for this purpose a mechanical ejector 10 is provided at station B on the conveyor. For space reasons, the ejector station B is a significant distance downstream of inspection station A. It is therefore necessary to delay the operation of the ejector after detection of a reject body by the camera 6 and processing circuit 8, as the reject body travels between the stations A and B.

If there is no slippage between the can bodies and the conveyor belt, the delay can be calculated from the conveyor belt speed. In practice, slippage must be expected when the conveyor is moving at higher speeds, or when the can bodies are subjected to obstruction or friction, eg. due to the presence of guard rails at the sides of the conveyor. The speed of a body travelling along the conveyor pass is thus less than the speed of the conveyor belt itself, but the causes of slippage make it impossible to predict, from the speed of the conveyor belt, when a reject can body will arrive at the ejector.

In order to measure the time interval, apparatus is provided for monitoring the movement of the can bodies between the camera and the ejector, comprising a Doppler-effect detector 12 of generally known form typically a radar microwave device, mounted above the conveyor belt and having its viewing axis 14 tilted downwards obliquely to the conveyor belt between stations A and B. Its field of view, indicated by broken lines 16, is intersected by the can bodies on the belt shortly before they reach the inspection station A and the bodies remain within the field of view until they reach the ejector station B. Reflected signals are returned from the can bodies to the detector to provide a measure of the movement of the bodies in terms of the frequency difference between the output and reflected signals. The detector circuitry produces a series of pulses at intervals dependant upon the frequency difference. After correction for the angle of obliquity of the detector beam, each pulse produced by a returned signal represents a specific distance along the conveyor track, in dependence upon the wavelength of the beam. The pulse intervals are averaged to smooth out transitory disturbances and the movement of the can bodies is thereby continuously monitored, independently of the conveyor track speed.

A control computer 20 receives, through interface 22, inputs from the signal processor 8 and from the detector 12, and has an output to the ejector 10. As each can body passes through the inspection stage, the camera signals are evaluated in the signal processor 8 to determine whether the can body is acceptable; if it is rejected, an activating pulse is delivered to the computer. An appropriately timed output signal is then delivered from the computer to the ejector to remove the reject can body from the conveyor into a discard receptacle (not shown). The use of the Doppler-effect detector is able to provide instantaneous data which can be accumulated to keep a check on the distance travelled from the inspection station in order to control that output signal. The continual observation of the movement of the can bodies between the inspection and ejection stations ensures that speed differences between the can body and the conveyor belt do not prevent synchronisation of the operation of the ejector to remove reject can bodies.

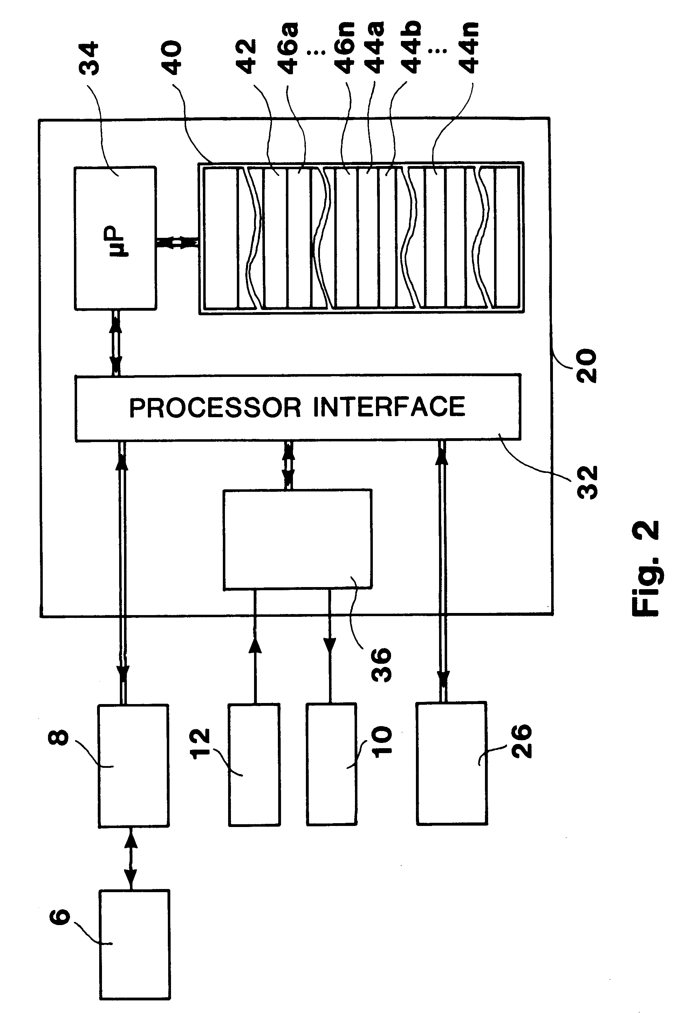

The control computer 20 is shown in more detail in Fig. 2. The camera processor 8 is connected to processor interface 32 of central processing unit 34 of the computer 20. The detector 12 and ejector 10 are coupled through an input/output interface 36 to the processor interface 32. The computer is provided with a memory 40 containing a distance count section in which is held a measure of the distance between the inspection and ejection stations in terms of pulses from the Doppler effect detector. A series of counters 44a...44n have respective addresses 46a...46n through which they can receive the detector pulse signals. Any one of the addresses 46a...46n can be opened by an activating pulse from the signal processor 8 as a reject can body passes the inspection station. The addresses are opened in sequence by successive activating pulses and the memories 44a, 44b etc are therefore assigned each to an individual reject can body. The computer can thus monitor the movement of a number of reject can bodies present at the same time between the inspection and reject stations. As each reject body reaches the ejector its associated counter will provide the signal to eject it from the conveyor.

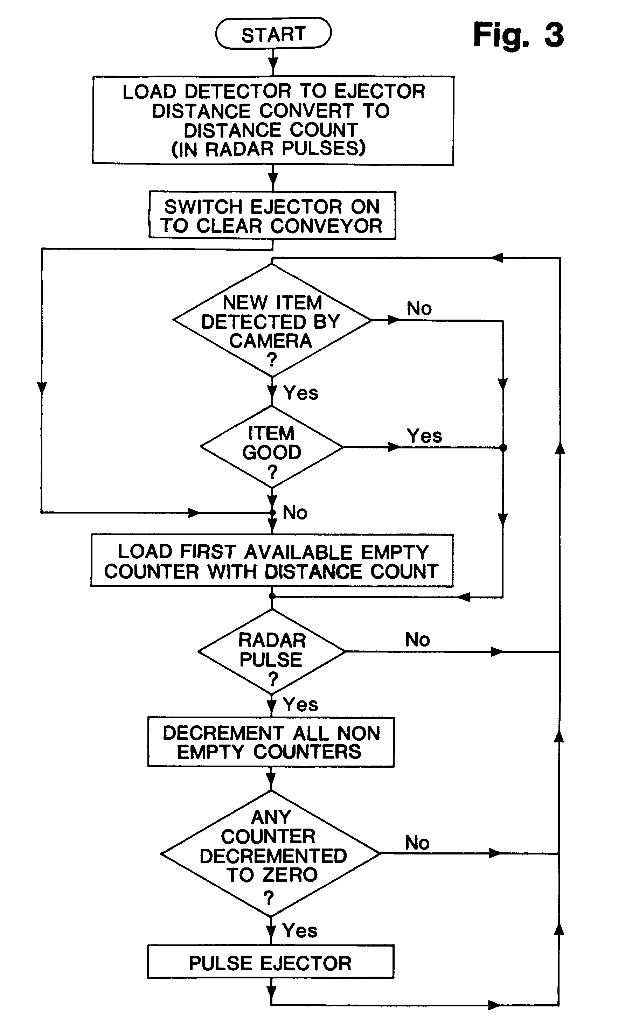

The operation flow chart of Fig. 3 indicates that the detector-to-ejector distance, ie. the conveyor path length between detector 6 and ejector 10, is measured in radar pulses from the Doppler-effect detector 12, duly corrected for the obliquity of the beam. The pulse number representing the path length can be preset before operation begins, to be carried by the counters 44, via data switches 26 (Fig. 2) forming part of the control and display unit 24. As a further preliminary step, the conveyor is cleared of any can bodies between the inspection and ejector stations, eg. using the ejector 10, since any reject body there will not otherwise be discarded.

With the apparatus in operation, as each can body arrives at the inspection station the image processing system 8 of the camera determines whether or not it should be rejected. If it is to be rejected an activating signal is outputted from the system 8 to the computer and the first available empty counter 44 is loaded with the distance count. That counter is thereafter decremented by the pulses from the detector 12 until, upon reaching zero, it outputs a signal that causes the ejector to be operated. This coincides with the arrival of the can body opposite the ejector, so that the can body is displaced from the conveyor into the discard receptacle. The movement of each further can body passing the inspection station is monitored by its individual counter, so a sufficient number of counters should be provided to match the maximum number of can bodies that may be present between the inspection and ejection stations at any instant. In the event of a hold-up it may be necessary again to clear can bodies from the conveyor because with the conveyor running at low speed or stopped the displacement measurement system becomes unreliable.

A surprising feature of the arrangement is that, with a number of counters operative, they can be decremented synchronously by common pulse signals from the Dopplereffect detector 12 to determine the arrival of their respective can bodies at the ejector with sufficient accuracy. In practice, the detector 12 will respond to the strongest signal it receives, ie. the can body that returns the strongest reflection, so that in their path between detection and ejection it is likely that each can body will in turn provide the pulse reflections that determine the output of the detector 12. In other words, the measurement of the distance travelled by any one can body between detection and ejection will usually be dependent upon the speed measurements made from a series of neighbouring can bodies in addition to that particular can body itself. It is surprising that these measurements allow the travel distance of a can body to be evaluated with sufficient accuracy having regard to the fact that apparently random slippage plays its part in determining the movement of the can bodies, but it would appear that the difference between the mean travel speeds of the can bodies is considerably less than is the difference between the mean speed of any body relative to the conveyor belt itself.

The invention does not in fact preclude measurement of the conveyor displacement being used to monitor the can body displacement for some part of the travel between the inspecting and operating stations, provided that the errors resulting from this can be kept within an acceptable tolerance. If the detector 12 does not have can bodies within its beam over the complete path between the two stations, the missing section may be monitored by taking measurements from the conveyor track instead. If only very weak signals can be obtained from the can bodies over some part of the path, it may be preferable to override these with signals from the conveyor to avoid the measurements being invalidated by extraneous external signals or noise in the circuits of the Doppler-effect device. This latter case might occur in the illustrated sample if only a single can were present on the conveyor, when the signal from it would fall off as it approached the ejector station as it moved out of the beam. For the Doppler-effect device to respond to the movement of the conveyor track itself, the track must comprise an appropriate reflective material. In fact, conventional slatted conveyor belts will usually be effective because even if the slats making up the travel surface are of plastics materials, the pivot connections between the slats normally contain metallic components that provide an adequate radar reflection. Screening of the return run of the belt is likely to be required in this case to prevent an unwanted "negative displacement" signal being picked up by the detector.

Many modifications of the described arrangement are possible within the scope of the claims. For example, the detector 12 may have its viewing axis directed either downstream or upstream, and its obliquity to the conveyor track can be varied, although it should not be substantially greater than 30 degrees because of the problems of correcting the reflected signals adequately to give accurate movement measurements. Depending upon the siting of the conveyor system, it may be possible to direct the detector beam onto the conveyor path obliquely from the side.

Furthermore, the activating station is not necessarily located within the zone of action of the detector beam on the can bodies. It can be set some distance upstream of that zone since the can bodies that have already entered the beam have been shown to provide adequate movement signals for bodies that follow them and since it may be acceptable to rely on measurements from the conveyor itself for some minor part of the total measurement, if it has a moving track.

## Claims

1. A method of controlling an action on a selected article (4) travelling on a conveyor (2) after identification of the article at an activating station (A), the action being performed at an operating station (B) at a distance along the conveyor downstream of the activating station, wherein the random arrival of the article (4) at the activating station (A) is utilized to generate a start signal for measuring its travel along the conveyor (2), the movement of the article along the conveyor is measured by use of a Doppler-effect device (12) during the passage of the article between said stations (A,B), the Doppler-effect device producing a cumulative series of distance measurements to determine from the start signal the moment of arrival of the article at the operating station, and an actuating signal is generated in accordance with the moment of arrival so calculated in order to synchronise the performance of said action with said arrival of the selected article.

2. Method according to claim 1 wherein the article is inspected at the activating station (A) and in dependence upon said inspection the start signal is generated.

3. Method according to claim 2 wherein articles failing the inspection at said activating station (A) are ejected from the conveyor at said operating station (B).

4. Method according to any one of the preceding claims wherein a series of articles (4) are carried by the conveyor at a mean spacing smaller than the distance between the activating and operating stations and their displacements between said stations are monitored simultaneously by a common Doppler effect device (12).

5. Method according to any one of the preceding claims wherein, in the absence of any articles (4) in the field of view of the Doppler effect device (12), said device is actuated by moving radiation-reflecting elements of the conveyor to generate an output from the device representing the movement of the conveyor itself.

6. Apparatus for use with a conveying system to control, in accordance with the operation of activating means (6, 8) at a first station (A) along the path of a conveyor (2), means (10) acting at a downstream operating system (B) on articles (4) conveyed by said conveyor (2), **characterised** in that the apparatus comprises
   - a measuring device,
   - whereby this measuring device covers a per se known Doppler-effect detection device (12) directed onto the path of the randomly arriving articles (4) between said first station (A) and the downstream operating system (B),
   - control means (20) connected to said activating means (6,8) being arranged to receive an input signal
   - processing means (40) for accumulating a series of movement measurements from said Doppler-effect detection device,
   - said control means (20) being arranged to generate an output signal for the means (10) acting at a downstream operating system, when the travel distance determined by said processing means (40) indicates that the selected article has reached said second station.

7. Apparatus according to claim 6 wherein an inspection device (6) is located at said first station (A) and is arranged to actuate the operation of the means (10) at said second station (B) in dependence upon the result of inspection of an article (4) passing through said first station.

8. Apparatus according to claim 7 wherein an ejection device (10) is located at said second station (B) to be actuated by said activating signal for removing an identified article (4) from the conveyor (2).

9. Apparatus according to any one of claims 6 to 8 comprising data storage means (40) for evaluating, the progress of an article between the first and second stations (A and B), said storage means having a plurality of counters (44) arranged to be addressed sequentially whereby to evaluate the passages of each of a plurality of articles (2) being conveyed in series between the first and second stations.

10. Apparatus according to any one of the preceding claims 6 to 9 when the Doppler-effect device (12) is arranged with its beam axis (14) directed obliquely onto the conveyor (2), preferably at an angle of not substantially more than 30 degrees to the travel direction of the article.

**Patentansprüche**

1. Verfahren zum Steuern einer Aktion an einem ausgewählten Gegenstand (4), der auf einem Förderer (2) fährt, nach der Identifizierung des Gegenstands in einer Aktivierstation (A), wobei die Aktion in einer Betriebsstation (B) in einer Distanz längs des Förderers stromabwärts der Aktivierstation ausgeführt wird, wobei die willkürliche Ankunft des Gegenstands (4) in der Aktivierstation (A) benutzt wird, um ein Startsignal zum Messen seiner Fahrt längs des Förderers (2) zu erzeugen, wobei die Bewegung des Gegenstands längs des Förderers durch eine Doppler-Effekt-Vorrichtung (12) während der Passage des Gegenstands zwischen den Stationen (A, B) gemessen wird, wobei die Doppler-Effekt-Vorrichtung eine kumulative Reihe von Distanzmessungen erzeugt, um ab dem Startsignal den Augenblick der Ankunft des Gegenstands in der Betriebsstation zu bestimmen, und wobei ein Betätigungssignal gemäß dem so berechneten Augenblick der Ankunft erzeugt wird, um die Ausführung der Aktion mit der Ankunft des ausgewählten Gegenstands zu synchronisieren.

2. Verfahren nach Anspruch 1, wobei der Gegenstand in der Aktivierstation (A) inspiziert wird und wobei in Abhängigkeit von dieser Inspektion das Startsignal erzeugt wird.

3. Verfahren nach Anspruch 2, wobei Gegenstände, die die Inspektion in der Aktivierstation (A) verpassen, in der Betriebsstation (B) von dem Förderer heruntergestoßen werden.

4. Verfahren nach einem der vorhergehenden Ansprüche, wobei eine Reihe von Gegenständen (4) durch den Förderer in einem mittleren Abstand transportiert wird, der kleiner als die Distanz zwischen der Aktivier- und Betriebsstation ist, und wobei ihre Verlagerungen zwischen den Stationen durch eine gemeinsame Doppler-Effekt-Vorrichtung (12) gleichzeitig überwacht werden.

5. Verfahren nach einem der vorhergehenden Ansprüche, wobei bei Nichtvorhandensein von Gegenständen (4) in dem Sichtfeld der Doppler-Effekt-Vorrichtung (12) die Vorrichtung durch sich bewegende strahlungsreflektierende Elemente des Förderers betätigt wird, um ein Ausgangssignal der Vorrichtung zu erzeugen, das die Bewegung des Förderers selbst darstellt.

6. Vorrichtung zur Verwendung bei einem Fördersystem, um gemäß der Betätigung von Aktiviereinrichtungen (6, 8) in einer ersten Station (A) längs der Bahn eines Förderers (2) eine Einrichtung (10) zu steuern, die in einem stromabwärtigen Betriebssystem (B) auf Gegenstände (4) einwirkt, die durch den Förderer (2) gefördert werden,
**dadurch gekennzeichnet,** daß die Vorrichtung aufweist
   - eine Meßvorrichtung,
   - wobei diese Meßvorrichtung eine an sich bekannte Doppler-Effekt-Erfassungsvorrichtung (12) umfaßt, die auf die Bahn der willkürlich ankommenden Gegenstände (4) zwischen der ersten Station (A) und dem stromabwärtigen Betriebssystem (B) gerichtet ist,
   - eine Steuereinrichtung (20), die mit den Aktiviereinrichtungen (6, 8) verbunden ist, welche so angeordnet sind, daß sie ein Eingangssignal empfangen,
   - eine Verarbeitungseinrichtung (40) zum Akkumulieren einer Reihe von Bewegungsmessungen aus der Doppler-Effekt-Erfassungsvorrichtung,
   - wobei die Steuereinrichtung (20) so ausgebildet ist, daß sie ein Ausgangssignal für die Einrichtung (10) erzeugt, welche auf ein stromabwärtiges Betriebssystem einwirkt, wenn die Fahrtstrecke, welche durch die Verarbeitungseinrichtung (40) bestimmt wird, zeigt, daß der ausgewählte Gegenstand die zweite Station erreicht hat.

7. Vorrichtung nach Anspruch 6, wobei eine Inspektionsvorrichtung (6) in der ersten Station (A) angeordnet und so ausgebildet ist, daß sie den Betrieb der Einrichtung (10) in der zweiten Station (B) in Abhängigkeit von dem Ergebnis der Inspektion eines Gegenstands (4) betätigt, der durch die erste Station hindurchgeht.

8. Vorrichtung nach Anspruch 7, wobei eine Ausstoßvorrichtung (10) in der zweiten Station (B) vorgesehen ist, um durch das Aktiviersignal betätigt zu werden, und einen identifizierten Gegenstand (4) von dem Förderer (2) zu entfernen.

9. Vorrichtung nach einem der Ansprüche 6 bis 8, mit einer Datenspeichereinrichtung (40) zum Auswerten der Vorwärtsbewegung eines Gegenstands zwischen der ersten und zweiten Station (A und B), wobei die Speichereinrichtung mehrere Zähler (44) aufweist, die so angeordnet sind, daß sie sequentiell adressiert werden, um dadurch die Vorbeigänge jedes von mehreren Gegenständen (2) auszuwerten, die in Reihe zwischen der ersten und zweiten Station gefördert werden.

10. Vorrichtung nach einem der vorhergehenden Ansprüche 6 bis 9, wobei die Doppler-Effekt-Vorrichtung (12) so angeordnet ist, daß ihre Strahlachse (14) schräg auf den Förderer (2) gerichtet ist, vorzugsweise unter einem Winkel von nicht wesentlich mehr als 30 Grad zu der Bewegungsrichtung des Gegenstands.

**Revendications**

1. Procédé de commande d'une action effectuée sur un article sélectionné (4) se déplaçant sur un convoyeur (2), après identification de l'article à une station (A) d'activation, cette action étant effectuée à une station (B) d'intervention située à une certaine distance en aval, le long du convoyeur, de la station d'activation, dans lequel l'arrivée aléatoire de l'article (4) à la station (A) d'activation est utilisée pour générer un signal de départ de mesure de son déplacement le long du convoyeur (2), dans lequel le mouvement de l'article le long du convoyeur est mesuré en utilisant un dispositif (12) à effet Doppler pendant le passage de l'article entre lesdites stations (A, B), le dispositif à effet Doppler produisant une série cumulative de mesures de distance pour déterminer, à partir du signal de départ, le moment d'arrivée de l'article à la station d'intervention, et dans lequel un signal d'actionnement est généré en fonction du moment d'arrivée ainsi calculé, afin de synchroniser l'exécution de ladite action avec ladite arrivée de l'article sélectionné,

2. Procédé selon la revendication 1, dans lequel l'article est inspecté à la station (A) d'activation et dans lequel le signal de départ est généré en fonction de ladite inspection.

3. Procédé selon la revendication 2, dans lequel les articles qui échouent à l'inspection effectuée à ladite station (A) d'activation sont éjectés hors du convoyeur à ladite station (B) d'intervention.

4. Procédé selon l'une quelconque des revendications précédentes, dans lequel une série d'articles (4) est portée par le convoyeur à un espacement moyen inférieur à la distance entre les stations d'activation et d'intervention, et dans lequel leurs déplacements entre lesdites stations sont suivis de façon simultanée par un dispositif commun (12) à effet Doppler.

5. Procédé selon l'une quelconque des revendications précédentes, dans lequel en l'absence d'articles (4) dans le champ de vision du dispositif (12) à effet Doppler, ledit dispositif est actionné par des éléments mobiles du convoyeur, réfléchissant les radiations, de manière à générer un signal de sortie du dispositif qui représente le mouvement du convoyeur lui-même.

6. Appareil destiné à être utilisé avec un système convoyeur, servant à commander, en concordance avec le fonctionnement de moyens (6, 8) d'activation situés sur le trajet d'un convoyeur (2) à une première station (A), des moyens (10) agissant, au niveau d'un système aval (B) d'intervention, sur des articles (4) transportés par ledit convoyeur (2), caractérisé en ce que l'appareil comprend
   - un dispositif de mesure,
   - ce dispositif de mesure comportant dispositif détecteur (12) à effet Doppler connu en soi, qui est dirigé sur le trajet des articles (4), arrivant de façon aléatoire, entre ladite première station (A) et le système aval (B) d'intervention,
   - des moyens (20) de commande reliés aux dits moyen (6, 8) d'activation, agencés pour recevoir un signal d'entrée,
   - des moyens (40) de traitement destinés à accumuler une série de mesures de mouvement, provenant du dit dispositif détecteur à effet Doppler,
   - lesdits moyens (20) de commande étant agencés pour générer un signal de sortie destiné aux moyens (10) actifs au niveau du système d'intervention situé en aval, lorsque la distance parcourue déterminée par lesdites moyens (40) de traitement indique que l'article sélectionné a atteint ladite deuxième station.

7.  Appareil selon la revendication 6, dans lequel un dispositif (6) d'inspection est situé à ladite première station (A) et est agencé pour déclencher l'action des moyens (10) situes à ladite deuxième station (B), en fonction du résultat d'inspection d'un article (4) traversant ladite première station.

8.  Appareil selon la revendication 7, dans lequel un dispositif (10) d'éjection est situé à ladite deuxième station (B), de manière à être mis en action par ledit signal d'activation pour retirer un article identifié (4) du convoyeur (2).

9.  Appareil selon l'une quelconque des revendications 6 à 8, comprenant des moyens (40) de stockage de données pour évaluer la progression d'un article entre les première et deuxième stations (A et B), lesdits moyens (40) de stockage comprenant une série de compteurs (44) agencés de manière à être contactés en ordre séquentiel, de manière à évaluer ainsi les passages de chacun d'une pluralité d'articles (2) qui sont transportés en série entre les première et deuxième stations.

10. Appareil selon l'une quelconque des revendications précédentes 6 à 9, où le dispositif (12) à effet Doppler est disposé de telle façon que l'axe (14) de son rayon soit dirigé obliquement sur le convoyeur (2), de préférence sous un angle qui n'est pas sensiblement supérieur à 30 degrés par rapport à la direction du déplacement de l'article.

Fig. 1

Fig. 2

**Fig. 3**

START

LOAD DETECTOR TO EJECTOR
DISTANCE CONVERT TO
DISTANCE COUNT
(IN RADAR PULSES)

SWITCH EJECTOR ON
TO CLEAR CONVEYOR

NEW ITEM
DETECTED BY
CAMERA
?

No

Yes

ITEM
GOOD
?

Yes

No

LOAD FIRST AVAILABLE EMPTY
COUNTER WITH DISTANCE COUNT

RADAR
PULSE
?

No

Yes

DECREMENT ALL NON
EMPTY COUNTERS

ANY
COUNTER
DECREMENTED
TO ZERO
?

No

Yes

PULSE EJECTOR

11